Europäisches Patentamt

European Patent Office

Office européen des brevets

(11) Publication number: **0 325 317**
**A1**

# EUROPEAN PATENT APPLICATION

(21) Application number: **89200051.4**

(22) Date of filing: **10.01.89**

(51) Int. Cl.4: **C04B 35/00 , B22F 3/10**

(30) Priority: **14.01.88 NL 8800074**

(43) Date of publication of application:
**26.07.89 Bulletin 89/30**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Verweij, Hendrik**
**c/o INT. OCTROOIBUREAU B.V. Prof.**
**Holstlaan 6**
**NL-5656 AA Eindhoven(NL)**
Inventor: **Bruggink, Wilhelmus Hendrikus**
**Maria**
**c/o INT. OCTROOIBUREAU B.V. Prof.**
**Holstlaan 6**
**NL-5656 AA Eindhoven(NL)**

(74) Representative: **Pennings, Johannes et al**
**Internationaal Octrooibureau B.V. Prof.**
**Holstlaan 6**
**NL-5656 AA Eindhoven(NL)**

(54) Device for and method of removing an organic binder from a paste.

(57) An organic binder is removed from a paste by means of a firing device which comprises a thermostat (3) for adjusting the temperature. A new control mechanism enables the firing process to be carried out in a short period of time without crack formation or delamination occurring in the product. For that purpose the firing device comprises a weighing device (5) to determine the weight of the paste and a control device (6) between the weighing device (5) and the thermostat (3) with which the temperature is controlled to obtain a desired variation in time of the weight reduction rate of the paste.

EP 0 325 317 A1

## Device for and method of removing an organic binder from a paste.

The invention relates to a device for removing an organic binder from a paste using a firing device which comprises a thermostat for adjusting the temperature.

The invention also relates to a method of removing an organic binder from a paste by means of firing at elevated temperature.

A method of manufacturing multilayer ceramic capacitors using a paste consisting of a ceramic material and a metal paste for the manufacturing of electrodes is disclosed in European Patent Application EP 76011. In one of the steps of the method an organic binder is carefully fired in an oxidising atmosphere, in which step carbon may not stay behind. According to an example, an organic binder, polyvinyl alcohol, is removed in 16 hours by slowly heating in air to a temperature of 640°C. In experiments which have led to the invention it has been established that crack formation sometimes occurs in the ceramic material. Local delamination of the multilayer ceramic capacitors also occurs sometimes. It has been found possible to avoid these problems by adapting the firing process, for example, by performing the heating very slowly. The temperature is slowly raised from 125°C to 275°C as a linear function of time, the overall firing time being more than 100 hours.

It is an object of the invention to provide a device and a method with which an organic binder can be removed from a paste in an as short as possible period of time, and in which the firing process is controlled so that crack formation does not occur in the material. When manufacturing a(n) (intermediate) product which consists of several layers, firing should be carried out in such a manner that delamination does not occur.

According to the invention the object of providing a device is achieved by a device as described in the opening paragraph, which device is characterised in that the firing device comprises a weighing device to determine the weight of the paste and comprises a control device between the weighing device and the thermostat with which the temperature is controlled to obtain a desired variation in time of the weight reduction rate of the paste. The control device may comprise, for example, a digital or analog computer. The device may optionally comprise other conventional means to control a process, for example, a thermometer which is coupled to the control device and which is used to ensure that the temperature does not exceed a fixed maximum value.

The object of providing a method of removing an organic binder from a paste by means of firing at elevated temperature is achieved according to the invention in that in a continuous process during the firing the weight of the paste is determined, the firing temperature being controlled so that the weight reduction rate obtains a desired variation in time. By means of the method according to the invention it is prevented that too rapid, sudden changes occur. In an exothermal reaction it may occur that the oven temperature must fall to keep the reaction rate within limits.

The desired variation depends on the nature of the material to be treated and on the object of the treatment. A programming of the temperature variation conventionally used in the technique is replaced according to the invention by a programmed variation of the reduction in weight or, which is equivalent thereto, a programmed variation of the weight. As a result of this an accurately controlled and manageable process is obtained. For increasing the weight reduction rate the temperature should be raised, for reducing the rate the temperature is dropped.

In its simplest form the programmed weight reduction variation consists in fixing a maximally permissible rate of the reduction in weight; when said rate is reached the temperature is decreased. In a special embodiment of the method according to the invention, the weight reduction rate during the firing process has a substantially constant value, which means that, with the exception of the beginning and end of the firing process, only small fluctuations of the rate around a recommended value occur. The constant value is preferably taken to be equal to the maximally permissible rate to obtain an efficient use of the firing device.

The device and the method according to the invention are particularly suitable for being used for the removal of an organic binder from a green ceramic material.

The device and the method according to the invention are also suitable to be used for the removal of an organic binder from a metal paste.

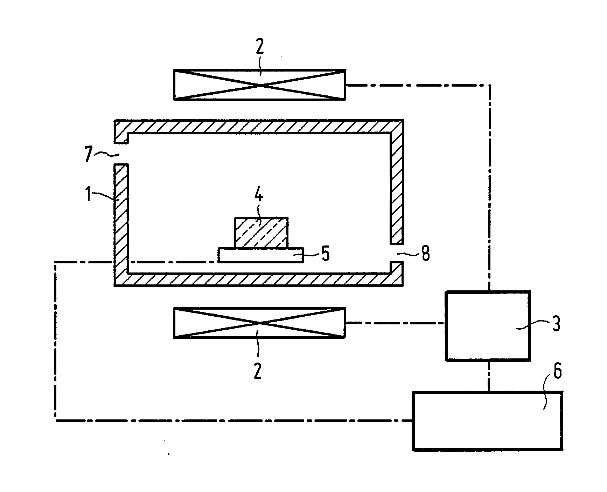

The invention will be described in greater detail with reference to embodiments of the device and the method and with reference to a drawing, the sole Figure of which shows diagrammatically a device according to the invention.

Embodiment of the device

Reference numeral 1 in the Figure denotes an oven having heating elements 2 which are controlled by means of a thermostat 3. A holder 4 for the material to be treated is present on a weighing device 5 in the oven. A programmable control device 6 between the weighing device and the thermostat processes signals from the weighing device into instructions for the thermostat.

Undesired fluctuations in the control system are damped by using a control in a number of steps. A thermostat preferably controls the current to the heating elements with reference to the temperature in the immediate proximity of the material to be heated, the target temperature being adjusted in a separate control circuit with reference to the measured weight of the material.

The oven may optionally be provided with other elements conventionally used in the technique, for example, inlet and outlet apertures 7 and 8 for leading through a gas. The control device may optionally be connected to other measuring and control instruments, for example, a thermometer in the oven, a clock, and means to control the flow of a gas through the oven.

Embodiment of the method

A presintered dielectric ceramic material, for example, a perowskitic barium-calcium-titanate-zirkonate, for example, as described in European Patent Application EP 76011, is mixed with a suitable organic binder, for example, polyvinyl alcohol. From the paste thus formed ceramic sheets are manufactured on which metal electrodes are provided, for example, by means of a silver-palladium paste with cellulose acetate as a binder. Stacking the sheets results in an intermediate product for multilayer ceramic capacitors.

The intermediate product is placed in a device according to the invention, after which the organic binders are fired leaving no residues, for example, in an oxygen atmosphere at a pressure of $2 \times 10^4$ Pa. If desired, firing may also be carried out in air at a pressure of $10^5$ Pa.

During the firing the temperature is controlled so that the weight reduction as a fraction of the original weight does not exceed a previously determined value per unit of time. During and after firing no cracks are formed in the ceramic material and delamination does not occur. The process may be terminated after a time which is a factor 3 to 4 shorter than the time which is required in a method which provides the same result and in which the temperature is slowly raised to a maximum value.

The ceramic material is then sintered and the intermediate product is processed to multilayer ceramic capacitors according to methods known per se.

## Claims

1. A device for removing an organic binder from a paste using a firing device which comprises a thermostat for adjusting the temperature, characterised in that the firing device comprises a weighing device to determine the weight of the paste and comprises a control device between the weighing device and the thermostat with which the temperature is controlled so as to obtain a desired variation in time of the weight reduction rate of the paste.

2. A method of removing an organic binder from a paste by means of firing at elevated temperature, characterised in that in a continuous process during firing the weight of the paste is determined, the firing temperature being controlled so that the weight reduction rate obtains a desired variation in time.

3. A method as claimed in Claim 2, characterised in that the weight reduction rate has a substantially constant value during the firing process.

4. A method as claimed in Claim 2 or 3, characterised in that the paste comprises a green ceramic material.

5. A method as claimed in Claim 2 or 3, characterised in that the paste comprises a metal in a finely divided form.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 152 489 (ALLMÄNNA SVENSKA ELEKTRISKA AB, VÄSTERAAS) * Claims 1-6 * | 1-5 | C 04 B 35/00 B 22 F 3/10 |
| A | DE-A-3 545 913 (SUMITOMO HEAVY INDUSTRIES) * Claims 1-6 * | 1-5 | |
| A | EP-A-0 032 404 (WITECCAYMAN PATENTS LTD) * Claims 1-4,21 * | 1-5 | |
| A | DE-A-2 633 309 (LECO CORP.) * Claim 1 * | 1-5 | |

TECHNICAL FIELDS
SEARCHED (Int. Cl.4)

C 04 B
B 22 F

The present search report has been drawn up for all claims

| Place of search | Date of completion of the search | Examiner |
|---|---|---|
| THE HAGUE | 11-04-1989 | LUETHE H. |